# EUROPEAN PATENT APPLICATION

(11) **EP 2 448 173 A1**
(43) Date of publication of application: **02.05.2012**
(21) Application number: 09847257.4
(22) Date of filing: 14.12.2009
(51) Int. Cl.: H04L 12/18

(54) **SYSTEM AND METHOD FOR REALIZING WIRELESS VIDEO CONFERENCE**

(30) Priority: 16.07.2009 CN 200910089395
(71) Applicant: ZTE Corporation, Shenzhen, Guangdong 518057 (CN)
(72) Inventor: LI, Jichao, Shenzhen Guangdong 518057 (CN); LING, Yong, Shenzhen Guangdong 518057 (CN); ZENG, Zhenzhuo, Shenzhen Guangdong 518057 (CN)
(74) Representative: Wilson Gunn
(86) International application number: PCT/CN2009/075547
(87) International publication number: WO 2011/006332

(57) **Abstract**

The present disclosure relates to a method and a system for realizing wireless video conference. A conference control server is set in a wireless video conference system. In the course of the wireless video conference, a speaker AT sends a signaling stream and/or a data stream for the wireless video conference to the conference control server via a PCN, the conference control server obtains the data stream and controls to the distribution of the data stream to non-speaker ATs. The present disclosure can realizes a wireless video conference which multiple participators can attend, and can ensure unified control of the functions of the wireless video conference.

## Description

### Technical field

The present disclosure relates to a technology of video conference, and in particular to a system and method for realizing wireless video conference.

### Background

Nowadays, when computer and wireless network technologies are highly developed, traditional wireless communication such as telephone and fax can not meet people's ever-increasing demands on communication, because they can not achieve an effect of face-to-face communication, while the growing wireless network environment makes the wireless communications of video and audio possible, a prominent application is remote wireless video conference.

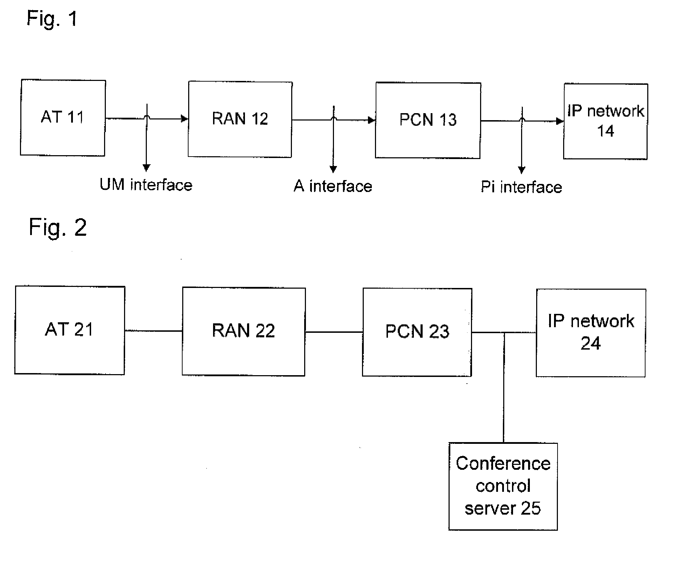

With the extensive commercial use of wireless broadband network, the high-speed data transmission link of wireless broadband network provides a security for a high-volume information transmission and the wireless video function is widely used by people. A wireless broadband network structure is as shown in Fig. 1, in which the wireless Access Terminal (AT) 11 keeps a data communication with Residential Access Network (RAN) 12 through an air interface (UM interface); wherein AT11 is fitted with devices to capture audio and video, e.g., camera and microphone; RAN12 is connected to a Packet Core Network (PCN) 13 through A interface; PCN13 is connected to an external Internet protocol (IP) network 14, such as the Internet, through Pi interface, and the Pi interface complies with IS-835 standard.

It is observed that AT has a function of capturing video and audio data, and accesses PCN by accessing RAN, thereby connecting to a wireless broadband network system. However, in the AT and accessed wireless broadband network system, currently there is a lack of control of an information stream among multiple ATs, including the control of a signaling stream and a data stream; furthermore, the prior art only provides a function of video phone for both parties without a function of multi-party vide phone, and then a function of multi-party wireless video conference also can not be provided.

### Summary

In view of this, the main purpose of the present disclosure is to provide a system and method for realizing wireless video conference, enabling a multi-party wireless video conference to be realized.

To achieve the above purpose, the technical solution of the present disclosure is realized as follows.

The present disclosure provides a system for realizing wireless video conference, which comprises: an AT, an RAN, a PCN and a conference control server, wherein
the AT is used for initiating a conference establishing/terminating request, or receiving a conference invitation and determining whether to participate in the wireless video conference; the AT is further used for sending a singling stream and/or a data stream to the PCN via the RAN, or receiving a data stream sent by the conference control server via the PCN and the RAN;
the RAN is used for transferring the signaling stream and/or the data stream;
the PCN is used for setting up wireless resources and performing Point-to-Point Protocol (PPP) initialization for each AT participating in the wireless video conference; performing access authentication to each AT participating in the wireless video conference; receiving the signaling stream and/or the data stream from the AT forwarded by the RAN and sending the stream to the conference control server; or receiving the data stream sent by the conference control server and distributing the data stream to each AT via the RAN;
the conference control server is used for receiving the signaling stream and/or the data stream from the AT forwarded by the PCN, and sending a data stream of a speaker AT to the PCN; and controlling the PCN to distribute the data stream of the speaker AT to each non-speaker AT via the RAN.

The system may further comprise an IP network for realizing a connection between a wireless network and a wired network and transmitting the signaling stream and/or the data stream among distant PCNs.

In the technical solution mentioned above, the data stream may comprise a multimedia stream and local data; the multimedia stream may be an audio stream and/or a video stream; the audio stream may be one-path or more; and the video stream may be one-path or more.

The present disclosure also provides a method for realizing wireless video conference, which comprises:
initiating a conference establishing request by an initiator AT; establishing respectively, by an PCN, wireless resources via an RAN for the initiator AT and a participator AT who pass access authentication, and performing PPP initialization by the PCN;
after an AT initiates a speaking request, forwarding the received speaking request by the PCN to a conference control server; when the AT who initiates the speaking request has a right to speak, sending by the AT who initiates the speaking request a data stream to the conference control server via the RAN and the PCN; sending by the conference control server the data stream to the PCN and controlling the PCN to distribute the data stream to each non-speaker AT;
when it is determined that the conference ends, releasing by the PCN the wireless resources of all ATs via the RAN, clearing by the conference control server all information of the wireless video conference stored on it.

The access authentication may comprise: performing access authentication to the initiator AT by the PCN, sending each participator AT a conference invitation by the PCN according to a number list of conference invitees in the conference establishing request and performing access authentication to each participator AT.

In the technical solution mentioned above, the conference establishing request may comprise: a number of the initiator, a number list of conference invitees, a high-priority conference request, conference member authority, a reserved conference and start time of the reserved conference.

In the technical solution mentioned above, the data stream may comprise a multimedia stream and local data; the multimedia stream may be an audio stream and/or a video stream; the audio stream may be one-path or more; and the video stream may be one-path or more.

In the technical solution mentioned above, the process of determining that the conference ends may be as follows: sending by an AT a conference terminating request to the conference control server via the RAN and the PCN; determining by the conference control server whether the AT who initiates the conference terminating request is the initiator AT or not; if the AT who initiates the conference terminating request is not the initiator AT, the request is unprocessed; if the AT who initiates the conference terminating request is the initiator AT, sending by the conference control server the PCN an conference terminating instruction which carries a number list of conference members; releasing by the PCN the wireless resources of all ATs via the RAN according to the number list of conference members in the conference terminating instruction; and clearing by the conference control server all information of the wireless video conference stored on it.

In the technical solution mentioned above, the process of determining that the conference ends may be as follows: sending by the conference control server the PCN an conference terminating instruction which carries a number list of conference members; releasing by the PCN the wireless resources of all ATs via the RAN according to the number list of conference members in the conference terminating instruction; and clearing by the conference control server all information of the wireless video conference stored on it.

In the technical solution mentioned above, when there are multiple speaking requests, a speaking request with a highest priority and a right to speak may be preferentially processed; when the priorities are same, a speaking request which is received firstly may be preferentially processed.

According to the system and the method for realizing wireless video conference of the present disclosure, a conference control server is set in the system for realizing wireless video conference, after a certain AT initiates a conference request, the PCN establishes a communication link for the wireless video conference system; in the course of the wireless video conference, the PCN sends the signaling stream and/or the data stream to the conference control server, the conference control server sends the PCN the data stream of a speaker and controls the PCN to distribute the data stream to non-speaker ATs, thereby realizing a multi-party wireless video conference.

Furthermore, the present disclosure can realize multiple functions through cooperation between the PCN and the conference control server, such as establishment of a conference, termination of a conference, control of speaking, and distribution of a multimedia stream. In this way, a multi-party wireless video conference is realized while a unified control is ensured on the functions of a wireless video conference, so that the wireless video conference can be realized in a simpler, more flexible, more convenient and more effective way.

### Brief description of the drawings

Fig. 1 shows a structure diagram of a wireless broadband network;
Fig. 2 shows a basic architecture diagram of a system for realizing wireless video conference according to the present disclosure;
Fig. 3 shows a flowchart of a method for realizing wireless video conference according to the present disclosure;
Fig. 4 shows a flowchart of establishing a system for realizing wireless video conference according to the present disclosure;
Fig. 5 shows a flowchart of requesting to speak in a system for realizing wireless video conference according to the present disclosure;
Fig. 6 shows a diagram of controlling of speaking in a system for realizing wireless video conference according to the present disclosure.

### Detailed description

The main idea of the present disclosure is: a conference control server is set in the wireless video conference system, in the course of wireless video conference, speaker AT sends a signaling stream and/or a data stream of the wireless video conference to the conference control server via PCN, and the conference control server acquires the data stream and controls the distribution of the data stream to a non-speaker AT.

The data stream herein comprises information such as a multimedia stream and local data; the multimedia stream comprises an audio stream and/or an video stream; the audio stream is one-path or more; the video stream is one-path or more.

In the course of wireless video conference, when the speaker AT initiates a speaking request, the speaking request may carry an audio and video transmission link request, which requests to transmit one-path or more of audio or video, that is, the audio stream is one-path or more, the video stream is also one-path or more, and it is usually to acquiesce in one-path audio stream and/or one-path video stream. The conference control server can inform PCN to establish a link for transmitting the audio stream and/or the video stream for the speaker AT according to the audio and/or video stream transmission link request in the speaking request; or establish multiple links for transmitting the audio and/or video stream. Correspondingly, AT has a multi-path display function and/or a multi-path playback function.

A system for realizing wireless video conference has a basic architecture as shown in Fig. 2 and comprises AT 21, RAN 22 and PCN 23, but the point is that the system is also provided with a conference control server 25, connected to PCN23; wherein

AT 21, used as an initiator to initiate a conference establishing request or as a participator to receive a conference invitation when a wireless video conference system is set up; wherein it is used for initiating a conference establishing request as an initiator, or for receiving a conference invitation as a participator and confirming whether to participate in the wireless video conference, if participation is decided, a response to accept the invitation is returned; otherwise no response is returned;

in the course of wireless video conference, the AT 21 serves as a speaker or a non-speaker; when serving as a speaker, it gathers audio data and/or video data of wireless video conference and sends a signaling stream and/or a data stream to the PCN 23 via the RAN 22; when serving as a non-speaker, it receives a multimedia stream sent from the conference control server 25 via the PCN 23 and the RAN 22;

AT 21 is further used for sending a request for terminating conference at the conclusion of the conference as the initiator.

In practical application, AT may be multiple, each AT has an audio capture device such as microphone, a video capture device such as camera, and an H.264 video coder-decoder; each AT has a function to initiate a request for establishing conference and a function to receive a conference invitation; and each AT has a video display function.

RAN 22 used for transferring a signaling stream and/or a data stream;

wherein the signaling stream is a signaling such as conference establishing request, speaking request and conference invitation; the data stream comprise an audio stream and/or a video stream and other shared data, etc., herein, the other shared data include local voice, video and data of AT shared by conference members, for example, a certain document may be shared between all members which participate in current wireless video conference.

PCN 23, used for setting up wireless resources and performing PPP initialization for each AT 21 participating in the wireless video conference; performing access authentication to each AT 21 participating in the wireless video conference, and establishing a connection via the RAN 22 after the access authentication succeeds; receiving the signaling stream and/or the data stream from AT 21 forwarded by RAN 22 and sending the stream to the conference control server 25; or receiving the multimedia stream sent by the conference control server 25 and distributing the multimedia stream to each AT 21 via the RAN 22.

The conference control server 25, used for receiving the signaling stream and/or the data stream from AT 21 forwarded by the PCN 23, and sending a multimedia stream in the data stream of a speaker AT 21 to PCN 23; and controlling PCN 23 to distribute the multimedia stream to each non-speaker AT 21 via the RAN 22.

Information such as the number of initiator AT, number list of conference members, high-priority conference request, conference member authority, reserved conference and IP addresses corresponding to the conference members are stored in the conference control server 25.

The multimedia stream described above is an audio stream and/or a video stream.

The system further includes an IP network 24, used for realizing a connection between a wireless network and a wired network and transmitting the signaling stream and/or the data stream among distant PCNs.

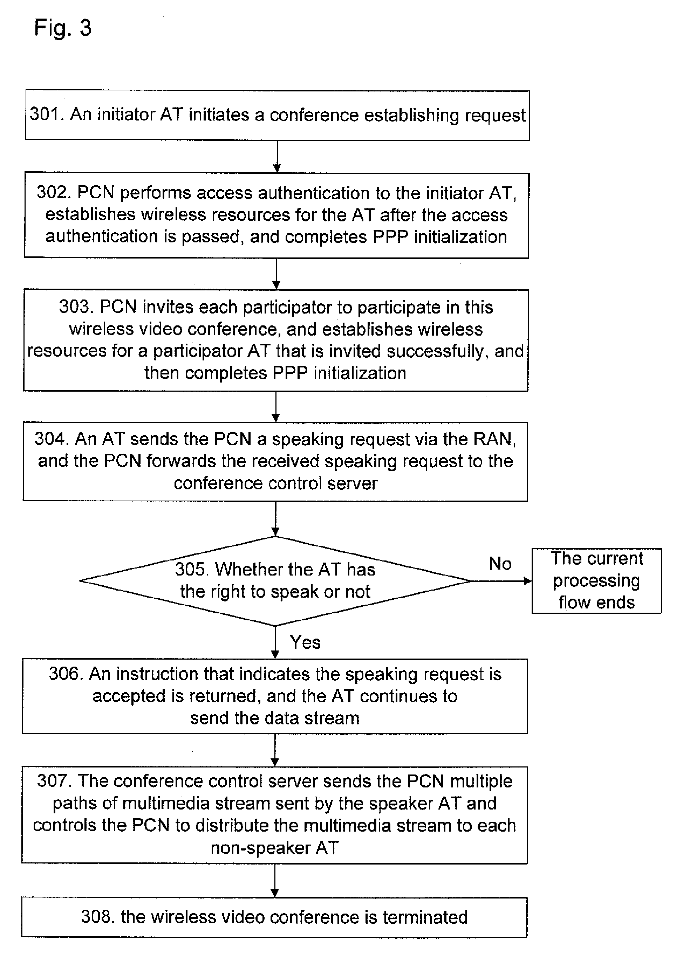

On the basis of the system structure shown in Fig. 2, a method for realizing wireless video conference according to the present disclosure is as shown in Fig. 3 and includes following steps.

Step 301: an initiator AT initiates a conference establishing request.

When a multi-party wireless video conference is put up, a conference establishing request is initiated by a certain AT, which refers to initiator AT. The initiator AT sends a conference establishing request to the PCN via the RAN. The conference establishing request includes but not limits to: the number of initiator AT, a number list of conference invitees, a high-priority conference request, conference member authority, a reserved conference and start time of the reserved conference. The conference member authority comprises information indicating whether a member possess a voice or a right to request for terminating a conference.

Step 302: PCN performs access authentication to the initiator AT, establishes wireless resources for the AT after the access authentication is passed, and completes PPP initialization.

Specifically, PCN completes the access authentication to the initiator AT after receiving the conference establishing request forwarded via the RAN; if the authentication fails, the request is released; if the authentication succeeds, the PCN establishes wireless resources for the initiator AT via the RAN, and performs PPP initialization to this AT.

The PPP initialization herein means that: the PCN allocates an IP address for the AT via the RAN in a 3G system.

Step 303: PCN invites each participator to participate in this wireless video conference, and establishes wireless resources for a participator AT that is invited successfully, and then completes PPP initialization.

Specifically, when establishing wireless resources for the initiator AT, the PCN extracts the number list of conference invitees in the conference establishing request and sends a conference invitation to each participator AT via the RAN according to the number list of conference invitees; the AT that receives the conference invitation determines whether to participate in this wireless video conference itself; if it does not participate in the wireless video conference, no response to accept the invitation is returned, and the PCN determines that the corresponding invitation is unsuccessful, thereby performing no operation; if it determines to participate in the wireless video conference, the corresponding AT returns a response to accept the invitation to the PCN via the RAN, and when the PCN determines that the corresponding invitation is successful after receiving the response to accept the invitation, it establishes wireless resources via the RAN for the AT that is invited successfully, and completes PPP initialization to allocate an IP address for the corresponding AT.

Steps 304-306: a certain AT sends the PCN a speaking request via the RAN, and the PCN forwards the received speaking request to the conference control server, the conference control server determines whether the AT has the right to speak or not; if the AT does not have the right to speak, an instruction that indicates the speaking request is unaccepted is returned and the current processing flow ends; if the AT has the right to speak, an instruction that indicates the speaking request is accepted is returned, and the AT, as the speaker, continues to send the data stream; wherein the data stream include a multimedia stream.

In the course of wireless video conference, any AT sends PCN a speaking request via the RAN when it wants to speak, PCN then forwards the request to the conference control server, the conference control server determines whether the AT that currently sends the speaking request has the right to speak or not according to the stored conference member authority after receiving the speaking request from the AT; if the AT does not have the right to speak, the conference control server returns an instruction that indicates the speaking request is unaccepted and ends the current processing flow; if the AT has the right to speak, the conference control server returns an instruction that indicates the speaking request is accepted.

The speaking request carries an audio and video transmission link request of AT, which requests to transmit one or more paths of audio or video stream. It is usually to acquiesce in one-path audio stream and/or one-path video stream.

Herein, the instruction that indicates the speaking request is accepted or not is returned to the PCN by the conference control server, and then sent to the AT that initiates the speaking request by the PCN via the RAN; wherein the speaking request includes: identity information of the AT that initiates the speaking request, such as Electronic Serial Number (ESN), etc..

After receiving the returned instruction that indicates the speaking request is accepted via the RAN, the AT becomes a speaker of the conference, and sends the data stream used for the wireless video conference to the PCN via the RAN, then PCN forwards the data stream to the conference control server; wherein the data stream includes: a video stream, an audio stream and other local data, wherein the data stream carries an identifier of the speaker AT, which may be the number of the speaker AT.

Step 307: the conference control server sends the PCN one or more paths of multimedia stream sent by the speaker AT and controls the PCN to distribute the one or more paths of multimedia stream to each non-speaker AT.

Herein, the multimedia stream is an audio stream and/or a video stream. The conference control server can inform PCN of establishing a link for transmitting the audio stream and/or the video stream for the speaker AT according to an audio stream and/or video stream transmission link request in the speaking request, or establishing multiple links for transmitting the audio stream and/or video stream, each link is used for transmitting one-path audio stream or one-path video stream.

Herein, the conference control server may inform the PCN of establishing one or more links for a non-speaker AT according to the identifier of the speaker AT, and transmitting one or more paths of audio stream and/or video stream of the speaker AT.

Based on the number list of conference members, the PCN distributes one or more paths of audio stream and/or video stream to a non-speaker AT via the RAN. The non-speaker AT can receive multiple paths of audio stream and/or video stream, and can complete the decoding of the multiple paths of audio stream and/or video stream and can display or play multiple paths of audio stream and/or video stream. After receiving the multiple paths of audio stream and/or video stream, the non-speaker AT displays the processed audio stream and/or processed video stream of conference. For other local data, the conference control server can directly send it to related AT via PCN and RAN in accordance with the number list of conference members.

Step 308: the wireless video conference is terminated.

When the conference ends, a AT sends a conference terminating request to the conference control server via the RAN and the PCN, then the conference control server determines whether the AT that initiates the conference terminating request is the initiator AT according to the stored information of conference members; if it is, the conference control server returns an instruction that indicates terminating the conference and the number list of conference members to the PCN, and the PCN releases the wireless resources of the corresponding AT via the RAN according to the instruction and the number list; moreover, the conference control server clears all stored information of this wireless video conference, then the wireless video conference ends; if the AT that initiates the conference terminating request is not the initiator AT, the wireless video conference continues.

Herein, the conference terminating request may also be initiated by the conference control server.

Certainly, in the present disclosure, IP network can also participate in the transmission of the signaling stream and the data stream between PCN and conference control server. If ATs participating in a wireless video conference are in different PCNs, then when the PCN that an AT locates in is not directly connected to the conference control server, the signaling stream and the data stream shall be transmitted by the PCN to the conference control server via IP network, or by the conference control server to the PCN via the IP network.

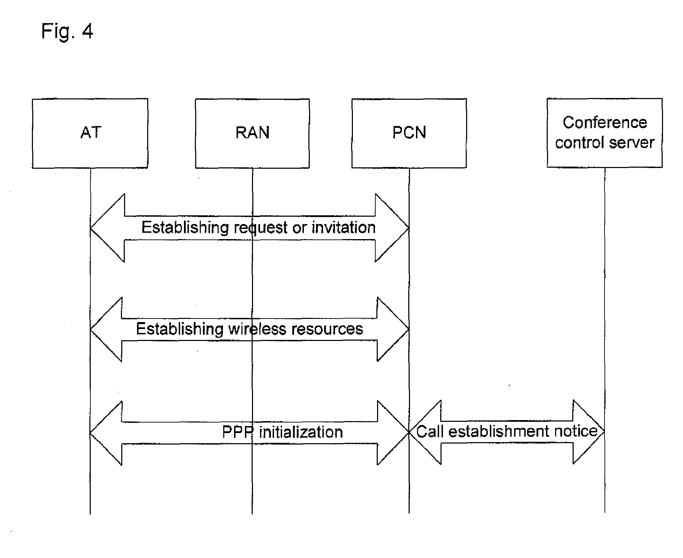

Fig. 4 shows a flowchart of establishing a system for realizing wireless video conference according to the present disclosure. As shown in Fig. 4. When it needs to start a wireless video conference, an initiator AT sends PCN a conference establishing request via RAN. The PCN performs access authentication to the initiator AT, if the access authentication fails, the PCN releases the request; if the access authentication succeeds, the PCN sets up a connection for the initiator AT via the RAN, establishes wireless resources for the initiator AT, and performs PPP initialization to allocate an IP address for AT. Meanwhile, the PCN extracts the number list of conference invitees in the conference establishing request, and sends a conference invitation to each participator AT via the RAN according to the number list of conference invitees through the UM interface.

The PCN is also responsible for addressing the participator AT in the case of roaming.

When receiving the conference invitation, each participator AT determines whether to participate in the wireless video conference or not, if a participator AT does not participate in the wireless video conference, no response to the invitation is returned so that the corresponding invitation fails thereby no operation is performed; if it participates, an invitation response is returned to the PCN via the RAN. When receiving the invitation response, the PCN determines that the corresponding invitation is successful, thus the PCN establishes wireless resources via the RAN for the participator AT which is successfully invited, and performs PPP initialization to allocate an IP address for the corresponding AT.

After that, PCN sends a call establishment notice to the conference control server in order to send the information in the wireless video conference, such as the number of initiator AT, the number list of conference members, high-priority conference request, conference member authority, reserved conference and IP addresses corresponding to the members, to the conference control server, and such information is stored by the conference control server, thereby a multi-party wireless video conference is set up.

Correspondingly, a request for terminating the conference may be initiated by the conference control server or the initiator AT, wherein the process of initiating the request for terminating the conference by AT is as follows: AT sends a conference terminating request to the conference control server via the RAN and the PCN; the conference control server determines whether the AT who initiates the conference terminating request is the initiator AT or not; if it is not, the request is not processed; if it is, the conference control server sends the PCN an conference terminating instruction which carries the number list of conference members; the PCN releases air-interface wireless resources of all ATs via the RAN according to the number list of conference members in the conference terminating instruction; the conference control server clears all information of the wireless video conference stored on it, and the wireless video conference ends.

The process of initiating the request for terminating the conference by the conference control server is as follows: the conference control server sends the PCN an conference terminating instruction which carries the number list of conference members; the PCN releases air-interface wireless resources of all ATs via the RAN according to the number list of conference members in the conference terminating instruction; the conference control server clears all information of the wireless video conference stored on it, and the wireless video conference ends.

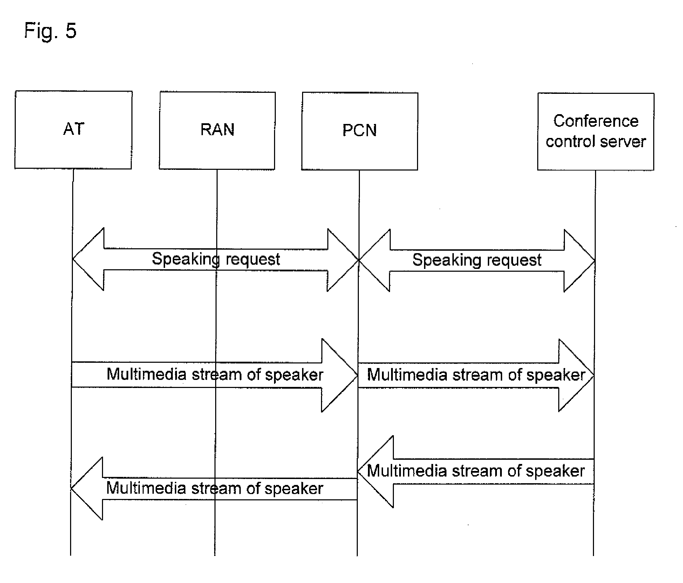

Fig. 5 shows a flowchart of requesting to speak in a system for realizing wireless video conference according to the present disclosure. As shown in Fig. 5. after a wireless video conference system is set up, in the course of the conference, a speaker AT sends PCN a speaking request via RAN when the AT wants to speak, then the PCN sends this speaking request to the conference control server. The conference control server receives the speaking request from the AT and determines whether the AT has the right to speak or not according to the stored conference member authority, if the AT does not have the right, the conference control server returns an instruction that indicates the speaking request is unaccepted; if the AT has the right, the conference control server returns an instruction that indicates the speaking request is accepted, and updates the number of the current speaker and the speaking state in the conference. The instruction that indicates the speaking request is accepted or unaccepted is returned by the conference control server to the PCN and sent to the speaker AT via the RAN, wherein the instruction that indicates the speaking request is accepted may be a speaking request response.

Herein, the speaking request carries the identity information of the AT who requests to speak, including ESN and so on.

When receiving the instruction that indicates the speaking request is unaccepted, the AT does not perform any operation. When receiving the instruction that indicates the speaking request is accepted, the AT transmits the data stream to the PCN via the RAN, and then the PCN forwards the data stream to the conference control server. The conference control server distributes the multimedia stream in the data stream to non-speaker ATs via the PCN and the RAN according to the stored number list of conference members; for other local data, the conference control server may send it to non-speaking ATs via the PCN and the RAN according to the number list of conference members, and non-speaker ATs decode the received multi-path multimedia stream to display and play, wherein the multimedia stream is an audio stream and/or a video stream.

An AT user may request to speak in the conference through its switching key, for example, pressing down the key to send a request for speaking in the conference, and releasing the key to send a request for terminating speaking.

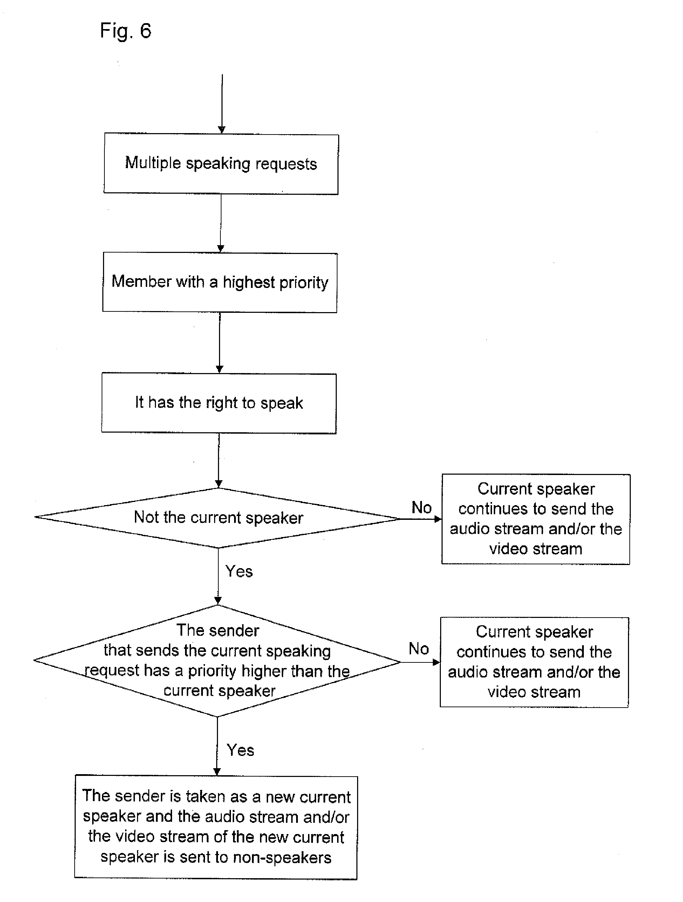

Fig. 6 shows a diagram of control of speaking in a system for realizing wireless video conference according to the present disclosure. As shown in Fig. 6, during the distribution and control of the video stream and/or audio stream in the wireless video conference, the conference control server receives a speaking request from AT. When there are multiple speaking requests, the conference control server preferentially processes the one with the highest priority and the right to speak. When the priorities are same, the conference control server preferentially processes a speaking request which is received firstly. When the sender that sends the current speaking request is not the current speaker and has a higher priority than the current speaker, the sender is taken as the new current speaker, and the conference control server needs to inform the PCN to send the audio stream and/or video stream of the new current speaker to other non-speakers. When the sender that sends the current speaking request is the current speaker, it continues to send the audio stream and/or video stream. When the sender that sends the current speaking request has a lower priority than the current speaker, the current speaker continues to send the audio stream and/or video stream. When the conference control server receives only one speaking request, the sender that sends the speaking request shall be taken as a new current speaker no matter whether it is the current speaker or not. All these above are just preferred embodiments, but not used to limit the protection scope of the present disclosure. Any modification, equivalent replacement and improvement and so on within the principle of the present disclosure shall be included in the protection scope of the present disclosure.

## Claims

1. A system for realizing wireless video conference, comprising: a wireless Access Terminal (AT), a Radio Access Network (RAN), a Packet Core Network (PCN) and a conference control server, wherein
the AT is used for initiating a conference establishing/terminating request, or receiving a conference invitation and determining whether to participate in the wireless video conference; the AT is further used for sending a singling stream and/or a data stream to the PCN via the RAN, or receiving a data stream sent by the conference control server via the PCN and the RAN;
the RAN is used for transferring the signaling stream and/or the data stream;
the PCN is used for setting up wireless resources and performing Point-to-Point Protocol (PPP) initialization for each AT participating in the wireless video conference; performing access authentication to each AT participating in the wireless video conference; receiving the signaling stream and/or the data stream from the AT forwarded by the RAN and sending the stream to the conference control server; or receiving the data stream sent by the conference control server and distributing the data stream to each AT via the RAN;
the conference control server is used for receiving the signaling stream and/or the data stream from the AT forwarded by the PCN, and sending a data stream of a speaker AT to the PCN; and controlling the PCN to distribute the data stream of the speaker AT to each non-speaker AT via the RAN.

2. The system for realizing wireless video conference according to claim 1, further comprising an IP network, used for realizing a connection between a wireless network and a wired network and transmitting the signaling stream and/or the data stream among distant PCNs.

3. The system for realizing wireless video conference according to claim 1 or 2, wherein the data stream comprises a multimedia stream and local data; the multimedia stream is an audio stream and/or a video stream; the audio stream is one-path or more; and the video stream is one-path or more.

4. A method for realizing wireless video conference, comprising:
initiating a conference establishing request by an initiator AT; establishing respectively, by an PCN, wireless resources via an RAN for the initiator AT and a participator AT who pass access authentication, and performing PPP initialization by the PCN;
after an AT initiates a speaking request, forwarding the received speaking request by the PCN to a conference control server; when the AT who initiates the speaking request has a right to speak, sending by the AT who initiates the speaking request a data stream to the conference control server via the RAN and the PCN; sending by the conference control server the data stream to the PCN and controlling the PCN to distribute the data stream to each non-speaker AT;
when it is determined that the conference ends, releasing by the PCN the wireless resources of all ATs via the RAN, clearing by the conference control server all information of the wireless video conference stored on it.

5. The method for realizing wireless video conference according to claim 4, wherein the access authentication comprises: performing access authentication to the initiator AT by the PCN, sending each participator AT a conference invitation by the PCN according to a number list of conference invitees in the conference establishing request and performing access authentication to each participator AT.

6. The method for realizing wireless video conference according to claim 4 or 5, wherein the conference establishing request comprises: a number of the initiator, a number list of conference invitees, a high-priority conference request, conference member authority, a reserved conference and start time of the reserved conference.

7. The method for realizing wireless video conference according to claim 4 or 5, wherein the data stream comprises a multimedia stream and local data; the multimedia stream is an audio stream and/or a video stream; the audio stream is one-path or more;
and the video stream is one-path or more.

8. The method for realizing wireless video conference according to claim 4 or 5, wherein the process of determining that the conference ends is as follows: sending by an AT a conference terminating request to the conference control server via the RAN and the PCN; determining by the conference control server whether the AT who initiates the conference terminating request is the initiator AT or not; if the AT who initiates the conference terminating request is not the initiator AT, the request is unprocessed; if the AT who initiates the conference terminating request is the initiator AT, sending by the conference control server the PCN an conference terminating instruction which carries a number list of conference members; releasing by the PCN the wireless resources of all ATs via the RAN according to the number list of conference members in the conference terminating instruction; and clearing by the conference control server all information of the wireless video conference stored on it.

9. The method for realizing wireless video conference according to claim 4 or 5, wherein the process of determining that the conference ends is as follows: sending by the conference control server the PCN an conference terminating instruction which carries a number list of conference members; releasing by the PCN the wireless resources of all ATs via the RAN according to the number list of conference members in the conference terminating instruction; and clearing by the conference control server all information of the wireless video conference stored on it.

10. The method for realizing wireless video conference according to claim 4 or 5, when there are multiple speaking requests, preferentially processing a speaking request with a highest priority and a right to speak; when the priorities are same, preferentially processing a speaking request which is received firstly.
